# EUROPÄISCHE PATENTSCHRIFT

(11) **EP 1 705 069 B1**
(45) Veröffentlichungstag und Bekanntmachung des Hinweises auf die Patenterteilung: **16.07.2008**
(21) Anmeldenummer: 06002602.8
(22) Anmeldetag: 09.02.2006
(51) Int. Cl.: B60R 16/02

(54) **Spurerkennungssystem und Verfahren**
Lane recognition system and method
Reconnaisance de voie et procédé

(30) Priorität: 21.03.2005 DE 102005014113
(43) Veröffentlichungstag der Anmeldung: 27.09.2006
(73) Patentinhaber: Valeo Schalter und Sensoren GmbH, 74321 Bietigheim-Bissingen (DE)
(72) Erfinder: Gotzig, Heinrich, 74081 Heilbronn (DE); Meyer, Thorsten, 74321 Bietigheim-Bissingen (DE)
(74) Vertreter: Bulling, Alexander

(56) Entgegenhaltungen:
- US-A- 5 717 398
- US-A1- 2005 052 532

## Beschreibung

Die Erfindung ein Spurerkennungssystem für ein Fahrzeug, mit einer Kamera zur Erfassung der vor dem Fahrzeug liegenden Fahrbahnmarkierungen und mit einer Auswerteeinheit zur Auswertung der von der Kamera erfassten Daten.

Derartige Spurerkennungssysteme sind in vielfältiger Art und Weise bekannt und werden häufig auch als Lane Departure Warning Systems oder als Spurwechselwarnsysteme bezeichnet. Die Systeme delektieren insbesondere die die Fahrbahn begrenzenden Linien und warnen den Fahrzeuglenker vor einem unbeabsichtigten Verlassen der Fahrbahn. Ein unbeabsichtigtes Verlassen der Fahrbahn kann beispielsweise bei Unachtsamkeit des Fahrzeuglenkers oder bei starker Müdigkeit beziehungsweise Schlaf des Fahrzeuglenkers auftreten.

Die Stromversorgung der bekannten Systeme erfolgt dabei über das Fahrzeugnetz. Ein Nachrüsten von Spurerkennungssystemen in Fahrzeuge ist aufgrund des Anschlusses des Systems an das Fahrzeugnetz mit nicht unerheblichem Aufwand verbunden.

Aus der gattungsbildenden US 5,717,398 A ist ein Radargerät bekannt geworden, dass von einer Solarzellen mit Strom versogt wird. Aus der US 2005/0052532 Al sind mit Solarstrom versorgte Videokameras bekannt geworden.

Der vorliegenden Erfindung liegt die Aufgabe zugrunde, ein Spurerkennungssystem der eingangs genannten Art derart weiterzubilden, dass ein Nachrüsten des Systems vereinfacht wird.

Diese Aufgabe wird bei einem eingangs genannten Spurerkennungssystem mit den Merkmalen des Anspruchs 1 gelöst. Die Solarzellen dienen folglich nicht nur zur Erzeugung von elektrischer Energie, sondern auch als eine Art Helligkeitssensor. Die Information über die Helligkeit der Umgebung wird folglich vorteilhaft ausgewertet.

Die Stromquelle kann dabei insbesondere Solarzellen und einen aufladbaren Stromspeicher, beispielweise eine oder mehrere aufladbare Akkuzellen, umfassen. Insbesondere das Vorsehen von Solarzellen hat den Vorteil, dass bei Vorhandensein von Licht Strom bereitgestellt werden kann. Ein aufladbarer Stromspeicher hat den Vorteil, dass unabhängig davon, ob Licht vorhanden ist, ausreichend Strom zur Verfügung gestellt werden kann.

Besonders vorteilhaft ist, wenn das System derart ausgebildet ist, dass bei vorhandenem Licht die Solarzellen das System mit Strom versorgen und/oder den Stromspeicher laden und dass bei Dunkelheit das System mit Strom vom Stromspeicher versorgt wird. Hierdurch kann gewährleistet werden, dass auch bei Dunkelheit ausreichend Strom zur Verfügung gestellt wird. Der Stromspeicher wird dabei vorteilhafterweise bei vorhandenem Licht geladen, unabhängig davon, ob das Spurerkennungssystem aktiviert oder deaktiviert ist. Bei deaktiviertem Zustand des Spurerkennungssystems bei vorhandenem Licht kann das System derart ausgebildet sein, dass das System zum einen mit Strom versorgt wird und gleichzeitig der Stromspeicher geladen wird. Bei dann auftretender Dunkelheit ist folglich der Stromspeicher geladen und es steht genügend Strom zum Betreiben des Systems zur Verfügung.

Gemäß einer besonders vorteilhaften Ausgestaltung der Erfindung ist vorgesehen, dass das System keine Anschlussmittel an eine externe Stromversorgung und/oder an andere Fahrzeugsysteme aufweist. Ein solches System kann folglich autark von anderen Systemen betrieben werden. Dies ist insbesondere für das Nachrüsten der Systeme in Fahrzeuge von Vorteil.

Die eingangs genannte Aufgabe wird zudem durch ein Verfahren zum Betreiben eines Spurerkennungssystems für ein Fahrzeug gelöst, bei dem das System mittels einer eigenen Stromquelle unabhängig von der Stromversorgung des Fahrzeugs betrieben wird. Die Stromquelle kann dabei von Solarzellen und/oder einem aufladbaren Stromspeicher gebildet werden.

Ein besonders bevorzugtes Verfahren ergibt sich dann, wenn bei vorhandenem Licht die Solarzellen das System mit Strom versorgen und/oder den Stromspeicher laden und wenn bei Dunkelheit das System mit Strom vom Stromspeicher versorgt wird. Hierdurch wird gewährleistet, dass unabhängig von der Helligkeit der Umgebung ausreichend Strom für das System bereitgestellt werden kann.

Das erfindungsgemäße Verfahren dient dabei insbesondere zum Betreiben eines erfindungsgemäßen Spurerkennungssystems.

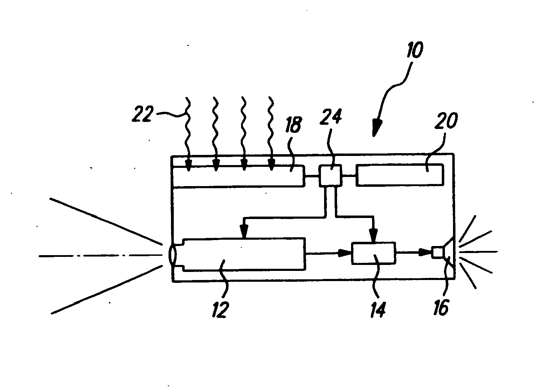

Weitere Vorteile und vorteilhafte Ausgestaltungen sind der folgenden Beschreibung zu entnehmen, in der die Erfindung anhand des in der Figur dargestellten Ausführungsbeispiels näher beschrieben und erläutert ist.

In der Figur ist ein erfindungsgemäßes Spurerkennungssystem 10 dargestellt, das eine Kamera 12 zur Erfassung der vor einem Fahrzeug liegenden Fahrbahnmarkierungen und eine Auswerteeinheit 14 zur Auswertung der von der Kamera erfassten Daten aufweist. Ferner ist ein Ausgabemittel 16 in Form eines Lautsprechers vorgesehen, mit dem ein Signalton ausgegeben wird, wenn das Spurerkennungssystem ein unbeabsichtigtes Verlassen der Fahrbahn erkennt.

Das Spurerkennungssystem sieht eine Stromquelle vor, die Solarzellen 18 und einen aufladbaren Stromspeicher 20 umfasst. Durch auf die Solarzellen 18 auftreffendes Licht 22 wird elektrischer Strom erzeugt, der zur Ladung des Stromspeichers 20 und/oder zum Versorgen der Kamera 12 und der Auswerteeinheit 14 dient. Dazu ist eine Ladesteuerung 24 vorgesehen. Die Ladesteuerung kann den von den Solarzellen erzeugten Strom derart steuern, dass bei vorhandenem Licht 22 der Stromspeicher 20 geladen wird. Beim Betrieb des Systems 10 bei Tageslicht kann die Kamera 12 und die Auswerteeinheit 14 dann entweder von den Solarzellen 18 oder vom Stromspeicher 20 versorgt werden. Bei Dunkelheit wird von den Solarzellen 18 kein Strom generiert; die Kamera 12 und die Auswerteeinheit 14 werden dann ausschließlich vom Stromspeicher 20 mit Strom versorgt.

Ferner kann über die Solarzellen die Helligkeit der Umgebung bestimmt werden. Mit Abhängigkeit von der bestimmten Helligkeit kann dann die Empfindlichkeit des Systems 10 und/oder die Blende der Kamera 12 eingestellt werden.

Das erfindungsgemäße System hat den Vorteil, dass es autark von der Stromversorgung eines Fahrzeugs betreibbar ist. Es ist deshalb zum Nachrüsten von Fahrzeugen besonders geeignet.

## Patentansprüche

1. Spurerkennungssystem (10) für ein Fahrzeug, mit einer Kamera(12) zur Erfassung der vor dem Fahrzeug liegenden Fahrbahnmarkierungen und einer Auswerteeinheit (14) zur Auswertung der von der Kamera (12) erfassten Daten, **dadurch gekennzeichnet, dass** das System eine von der Stromversorgung des Fahrzeugs unabhängige Stromquelle (18, 20) in Form von Solarzellen (18) aufweist, wobei über die Solarzellen (18) die Helligkeit der Umgebung bestimmbar ist und die Blende der Kamera und/oder die Empfindlichkeit des Systems (10) in Abhängigkeit von der über die Solarzellen (18) bestimmten Helligkeit einstellbar ist.

2. Spurerkennungssystem (10) nach Anspruch 1, **dadurch gekennzeichnet, dass** die Stromquelle auch einen aufladbaren Stromspeicher (20) umfasst.

3. Spurerkennungssystem (10) nach Anspruch 2, **dadurch gekennzeichnet, dass** das System derart ausgebildet ist, dass bei vorhandenem Licht (22) die Solarzellen (18) das System mit Strom versorgen und/oder den Stromspeicher (20) laden und dass bei Dunkelheit das System mit Strom vom Stromspeicher (20) versorgt wird.

4. Spurerkennungssystem (10) nach einem der vorhergehenden Ansprüche, **dadurch gekennzeichnet, dass** das System keine Anschlussmittel an eine externe Stromversorgung und/oder an andere Fahrzeugsysteme umfasst.

5. Verfahren zum Betreiben eines Spurerkennungssystems (10) nach einem der Ansprüche 1 bis 4.

## Claims

1. A lane recognition system (10) for a vehicle, having a camera (12) for registering the roadway markings located in front of the vehicle, and an evaluating unit (14) for evaluating the data registered by the camera (12), **characterized in that** the system has an electrical current source (18, 20) in the form of solar cells (18), which is independent of the electrical current supply for the vehicle, wherein the brightness of the surroundings can be determined by means of the solar cells (18), and the diaphragm of the camera and/or the sensitivity of the system (10) can be adjusted as a function of the brightness determined by means of the solar cells (18).

2. The lane recognition system (10) in accordance with claim 1, **characterized in that** the electrical current source also includes a chargeable electrical current storage device (20).

3. The lane recognition system (10) in accordance with claim 2, **characterized in that** the system is designed in such a way that, when light (22) is available, the solar cells (18) supply the system with electrical current and/or charge the electrical current storage device (20), and that during darkness the system is supplied with electrical current by the electrical current storage device (20).

4. The lane recognition system (10) in accordance with one of the preceding claims, **characterized in that** the system does not have any connecting means to an external electrical current supply and/or to other vehicle systems.

5. A method for operating a lane recognition system (10) in accordance with one of claims 1 to 4.

## Revendications

1. Système de détection de la trajectoire (10) pour un véhicule, comportant une caméra (12) pour détecter les marques sur la chaussée devant le véhicule et une unité d'analyse (14) pour analyser les données détectées par la caméra (12), **caractérisé en ce que** le système présente une source de courant (18, 20) sous forme de cellules solaires (18) indépendante de l'alimentation électrique du véhicule, les cellules solaires (18) permettant de déterminer la luminosité de l'environnement et le diaphragme de la caméra et/ou la sensibilité du système (10) pouvant être réglés en fonction de la luminosité déterminée par l'intermédiaire des cellules solaires (18).

2. Système de détection de la trajectoire (10) selon la revendication 1, **caractérisé en ce que** la source de courant comporte aussi un accumulateur de courant (20) rechargeable.

3. Système de détection de la trajectoire (10) selon la revendication 2, **caractérisé en ce qu'**il est conçu de manière à ce qu'en présence de lumière (22) les cellules solaires (18) l'alimentent en courant et/ou chargent l'accumulateur (20) et que dans l'obscurité le système soit alimenté en courant par l'accumulateur (20).

4. Système de détection de la trajectoire (10) selon l'une quelconque des revendications précédentes, **caractérisé en ce qu'**il ne comporte aucun moyen de branchement sur une alimentation électrique externe et/ou sur d'autres systèmes du véhicule.

5. Procédé permettant le fonctionnement du système de détection de la trajectoire (10) selon l'une quelconque des revendications 1 à 4.
